# EUROPÄISCHE PATENTSCHRIFT

(11) **EP 2 565 077 B1**
(45) Veröffentlichungstag und Bekanntmachung des Hinweises auf die Patenterteilung: **19.10.2016**
(21) Anmeldenummer: 12181279.6
(22) Anmeldetag: 22.08.2012
(51) Int. Cl.: B60P 3/41, B62D 33/02

(54) **Rückewagen-Arbeitsstation für forst- und landtechnischen Einsatz**
Trailer work station for forest and agricultural use
Station de travail avec remorque pour utilisation agricole et forestière

(30) Priorität: 02.09.2011 DE 102011112372; 20.10.2011 DE 102011116731
(43) Veröffentlichungstag der Anmeldung: 06.03.2013
(73) Patentinhaber: Sedlmayer, Johann, 07819 Triptis (DE)
(72) Erfinder: Sedlmayer, Johann, 07819 Triptis (DE)
(74) Vertreter: Kruspig, Volkmar

(56) Entgegenhaltungen:
- DE-A1- 3 938 024
- DE-A1- 10 351 552
- DE-A1- 19 911 872
- DE-U- 1 945 082
- US-A- 6 145 863
- US-A1- 2006 104 777

## Beschreibung

Die Erfindung betrifft eine Rückewagen-Arbeitsstation für forst- und landtechnischen Einsatz, umfassend einen Rahmen mit Achsträger, Achse und Rädern, am Rahmen befestigbare Rungen sowie eine am Wagenkopf befindliche Konsole zur Aufnahme eines Ladekrans oder ähnlichen Arbeitsmittels gemäß Patentanspruch 1.

Aus der DE 103 93 286 T5 ist eine Lademulde für ein lasttragendes Fahrzeug, insbesondere Transportfahrzeug, vorbekannt, wobei die Lademulde vertikal orientierte, kippbare Rungen aufweist. Darüber hinaus ist zur stirnseitigen Laderaumbegrenzung ein Gitter vorhanden, welches als Schutz für eine davor befindliche Fahrerkabine dient. Die Verschwenkung der an Armen angeordneten Rungen ermöglicht es, den Ladebereich an die Belastung bzw. an die zu transportierende Holzmenge anzupassen.

Die DD 70 501 offenbart eine hydraulische Anbau-Einrichtung zum Rücken von Langholz und Stubben. Hierfür in ein Heberahmen vorhanden, der an eine Dreipunkt-Aufhängung eines Zugfahrzeugs anbaubar ist. Das Heben und Senken des Rahmens ist durch die Ackerschienenhydraulik und das Öffnen sowie Schließen durch die Traktorenhydraulikpumpe über die am Rahmen befestigte Aufhängung mit entsprechenden Hydraulikzylindern realisierbar.

Bei dem Anhänger zum Transport von Stammholz nach DE 34 32 489 ist eine Holzauflage vorhanden, die um eine Achse von einer waagerechten Transportstellung in eine Lade- und Entladestellung kippbar ist. Das hintere Ende der Holzauflage liegt am Boden auf. Zum Kippen der Holzauflage ist ein Hydraulikzylinder vorhanden. Eine Zugvorrichtung am Schlepper dient zum Ziehen der Holzstämme auf die Holzauflage. Ergänzend ist eine rungenartige Seitenabstützung vorhanden, die die aufgenommenen Holzstämme in Transportstellung sichert.

Bei dem Rückezug für die Forsttechnik nach DE 41 31 012 A1 wird von einem Vorderwagen ausgegangen, der die Fahrkabine trägt. Ein Hinterwagen ist mit dem Vorderwagen durch ein Knickgelenk verbunden. Der Hinterwagen weist einen Laderaum auf, der zum Vorderwagen hin durch ein Ladegitter begrenzt ist. Ein Ladekran kann auf einem am Vorderende des Hinterwagens befestigten Kranportal montiert werden. Das Kranportal bildet einen Rahmen des Ladegitters. Der Schwenkantrieb für den Ladekran ist auf einem oberen, horizontalen Portalträger des Kranportals angeordnet. Darüber hinaus sind beidseitig des Hinterwagens Rungen vorhanden, um den Laderaum zu begrenzen bzw. das Ladegut zu sichern.

Zum Stand der Technik gehört nach DE 7 201 517 U1 ein Maschinensatz für Forstarbeiten mit Antriebskopf und Arbeitsnachläufer. Die Arbeitsmaschine besteht aus einem vorerwähnten Antriebskopf und mehreren Nachläufern, die je für sich hergestellt und jeweils einem bestimmten Arbeitsvorgang oder einer Arbeitskette entsprechend auswähl- und montierbar sind. Der jeweilige Arbeitsnachläufer und der zugehörige Antriebskopf ist mit einer Schnellkupplung zum Anschließen und unverwechselbaren Aneinanderfügen der Arbeitsnachläufer versehen.

Bekannt ist weiterhin ein Rückezug zum Rücken von Holz in Form eines Fahrzeugs, das auf einem Untergrund fahren kann und mit einem dem hinteren Ende des Rückezugs zugeordneten hinteren Fahrzeug-Rahmenteil, auf dem ein Rungenkorb zur Aufnahme von Kurzholz sitzt, gemäß DE 199 11 872 C2. Die Rungen sitzen auf jeder Seite des Rahmens in Trägern, die auf jeder Seite im Bereich ihres jeweiligen vorderen Endes am Fahrzeug-Rahmenteil angelenkt sind. Die Trägerteile sind in ihrer Längsrichtung verschiebbar. An den hintersten Trägerteilen sind Führungselemente zur gleichzeitigen, gegenseitigen Längsverschiebung der Trägerteile und Höhenverstellung der hintersten Rungenbank befindlich. Die Träger können bei einer bevorzugten Ausführungsform aus Teleskoprohren bestehen.

Bei dem Rückezug nach DE 41 31 010 wird von einem Rahmen ausgegangen, der im Grundriss U-förmig ist und zwei sich von einem vorderen Querträger nach hinten erstreckende parallele Rahmenschenkel besitzt. Die beiden Rahmenschenkel sind durch sich quer erstreckende Drahtketten miteinander verbunden, wobei die beiden Rahmenschenkel jeweils nahe am vorderen Querträger eine seitliche Ausnehmung für den Eingriff eines Ladekrangreifers umfassen. Darüber hinaus sind die Rahmenschenkel mit Aufnahmen für Rungen versehen.

Aus dem Vorgenannten ist es Aufgabe der Erfindung, eine weiterentwickelte Rückewagen-Arbeitsstation für forst- und landtechnischen Einsatz anzugeben, welche über einen einfachen Grundaufbau verfügt und je nach Einsatzzweck mit zusätzlichen Komponenten erweitert und angepasst werden kann. Die Konstruktion der Rückewagen-Arbeitsstation soll allen mechanischen Belastungen beim Einsatz entsprechen. Weiterhin sind Mittel vorzusehen, die nach Möglichkeit eine Beschädigung wesentlicher Komponenten der Rückewagen-Arbeitsstation bei deren Einsatz ausschließen.

Die Lösung der Aufgabe der Erfindung erfolgt durch die Rückewagen-Arbeitsstation für den forst- und landtechnischen Einsatz gemäß Patentanspruch 1, wobei die Unteransprüche mindestens zweckmäßige Ausgestaltungen und Weiterbildungen darstellen.

Es wird demnach von einer Rückewagen-Arbeitsstation ausgegangen, umfassend einen Rahmen mit Achsträger, mindestens einer Achse und auf der Achse befindlichen Rädern, am Rahmen befestigbaren Rungen sowie einer am Wagenkopf befindlichen Konsole zur Aufnahme eines Ladekrans oder eines ähnlichen Arbeitsmittels.

Erfindungsgemäß ist der Rahmen aus einem mittig angeordneten Zentralrohr sowie zwei hierzu parallel verlaufenden Hilfsrahmenrohren bestehend. Der Rahmen ist konstruktionsseitig zum Wagenkopf hin verbunden, jedoch zum Wagenkopfende hin offen, um brückenartige Rahmenverbindungen aufschieben zu können, die letztendlich die notwendige Stabilität der Gesamtkonstruktion des Rahmens sicherstellen.

Im jeweiligen Hilfsrahmenrohr sind Aussparungen zur verdrehsicheren Rungenaufnahme vorgesehen. Weiterhin ist der Achsträger zum Rahmen längsverschieblich angeordnet und es sind am Wagenkopf hydraulisch ausfahrbare, seitliche Stützbeine ausgebildet.

Durch das Ausfahren der Stützbeine am Arbeitsort können die erforderlichen Arbeiten ohne Kippgefahr der Arbeitsstation ausgeführt werden, z.B. das Beladen des Rückewagens mit entsprechenden Holzsortimenten.

Am Wagenende ist erfindungsgemäß eine Verlängerungsbrücke mit Seitenholmen und Aussparungen für die Rungenaufnahme aufsetzbar, so dass bei Bedarf die Ladefläche vergrößert werden kann.

Die vorerwähnten Stützbeine sind bevorzugt als Teleskopanordnung ausgebildet und weisen eine von der Wagenfront her betrachtete A-Form auf.

Die Stützbeine sind erfindungsgemäß über eine Sollbruchstelle mit dem Wagenkörper verbunden, so dass bei unbeabsichtigter Bewegung der Rückewagen-Arbeitsstation im ausgefahrenen Zustand der Stützbeine sich diese vom Wagen lösen können, ohne weitergehende oder tiefgreifende Beschädigungen herbeizuführen.

Der Wagenkopf kann bei einer bevorzugten Ausführungsform einen Zapfen-Durchtrieb und/oder ein Getriebe mit Nebenabtrieb aufnehmen, so dass sich eine multivalente Verwendung, z.B. durch Anschluss eines Hackers oder dergleichen ergibt.

Am Wagenkopf ist darüber hinaus ein die Ladefläche begrenzendes Stirngitter angeordnet. Hinter dem Stirngitter weist der Wagenkopf notwendige Steuerungselemente, einen Hydrauliktank und weitere Mittel sowie eine Anordnung zur Aufnahme einer an sich bekannten Schwenkdeichsel auf.

Bei einer bevorzugten Ausführungsform verfügt die Rückewagen-Arbeitsstation über einen eigenen Achsantrieb. Dieser Achsantrieb kann mit dem Zugfahrzeug gekoppelt werden. Auf Wunsch oder alternativ können bei der Rückewagen-Arbeitsstation Radnabenmotoren zum Einsatz kommen.

Durch das Stirngitter ist eine Antriebswelle für die vorerwähnten Arbeitsmittel geführt, die auf dem Rahmen auswechselbar montiert werden können.

Am Wagenende am oder im Zentralrohr kann eine Hängerkupplung vorgesehen sein. Es sei an dieser Stelle angemerkt, dass sowohl das Zentralrohr als auch die Hilfsrahmenrohre grundsätzlich auch als Hohlprofile beliebiger Querschnittsform ausgestaltet sein können.

Die unteren Enden der Rungen weisen seitlich hervorstehende Zentrierbolzen und Zentriernasen auf, die in einen diesbezüglich komplementären Rücksprung in den Aussparungen der Hilfsrahmenrohre eingreifen, so dass eine Verdrehsicherung der Rungen gegeben ist.

Weiterhin besitzen die Rungen, bevorzugt im unteren Bereich, hervorstehende Griffleisten oder eine dementsprechende Auskragung, um von einer Ladekrangreifzange aufgenommen, angehoben und beschädigungsfrei versetzt werden zu können.

Die oberen Enden der Rungen sind mit Schutzkappen versehen, die beispielsweise aus einem Kunststoffmaterial bestehen. Durch die Schutzkappen ist eine Beschädigung des zum Einsatz kommenden Kranteleskops weitgehend ausgeschlossen.

Die Erfindung soll nachstehend anhand eines Ausführungsbeispiels sowie unter Zuhilfenahme von Figuren näher erläutert werden.

Hierbei zeigen:

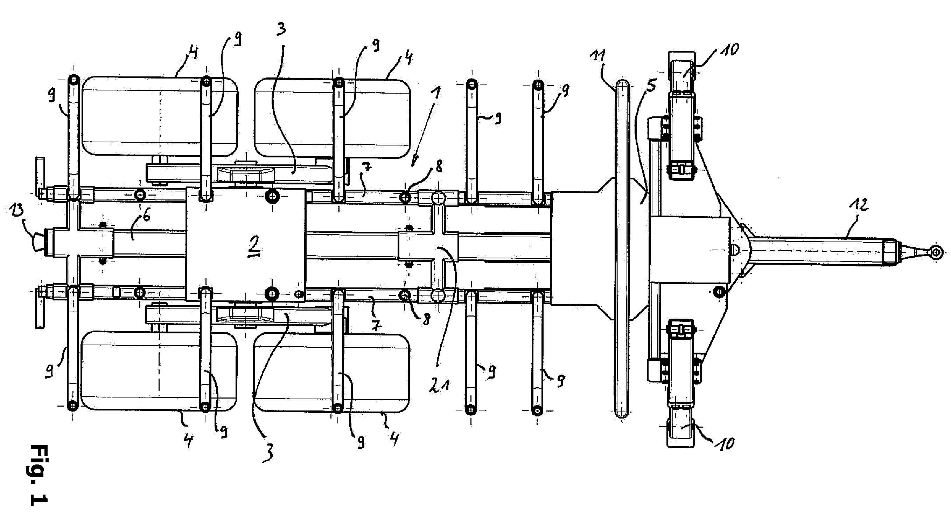

- Fig. 1: eine Draufsicht auf den dreiteiligen Rahmen nebst Wagenkopf und Deichsel;
- Fig. 2 und 3: Ansichten der Rückewagen-Arbeitsstation mit erkennbarem Schutzgitter sowie der A-förmigen Abstützung mit Sollbruchstelle und Verschraubung;
- Fig. 4: eine Draufsicht auf die Rahmenkonstruktion der Rückewagen-Arbeitsstation mit angedeuteter verschiebbarer Ausführung des Achsträgers;

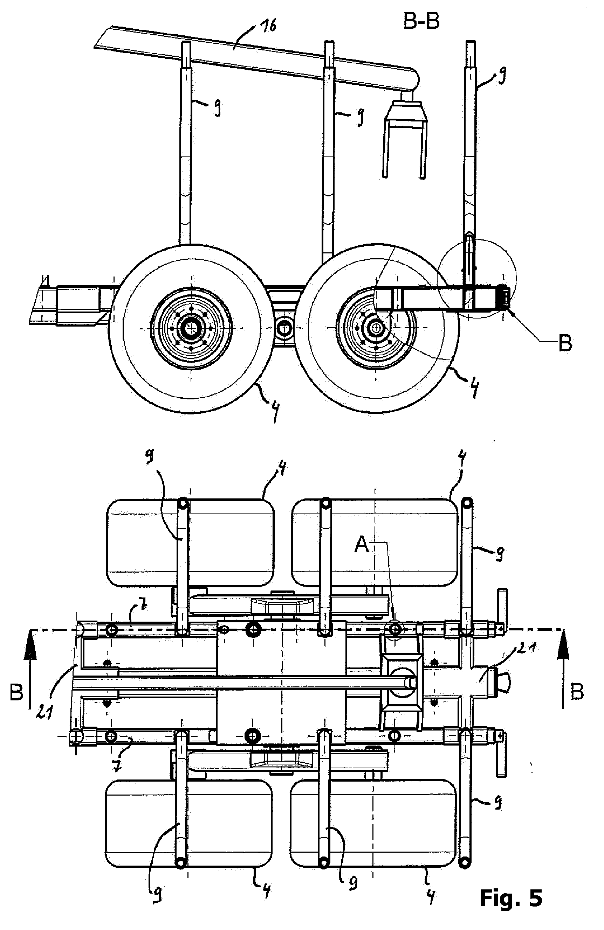

- Fig. 5: eine Seitenansicht sowie eine Draufsicht mit Teilschnitt hinsichtlich in den Hilfsrahmenrohren verdrehsicher eingesetzten Rungen;
- Fig. 6: eine Seitenansicht mit Verschiebeposition des Achsträgers der Rückewagen-Arbeitsstation;
- Fig. 7: Seitenansicht und Draufsicht auf die erfindungsgemäße Rückewagen-Arbeitsstation mit auf dem Rahmen aufgesetzter Verlängerung und Ladekran;

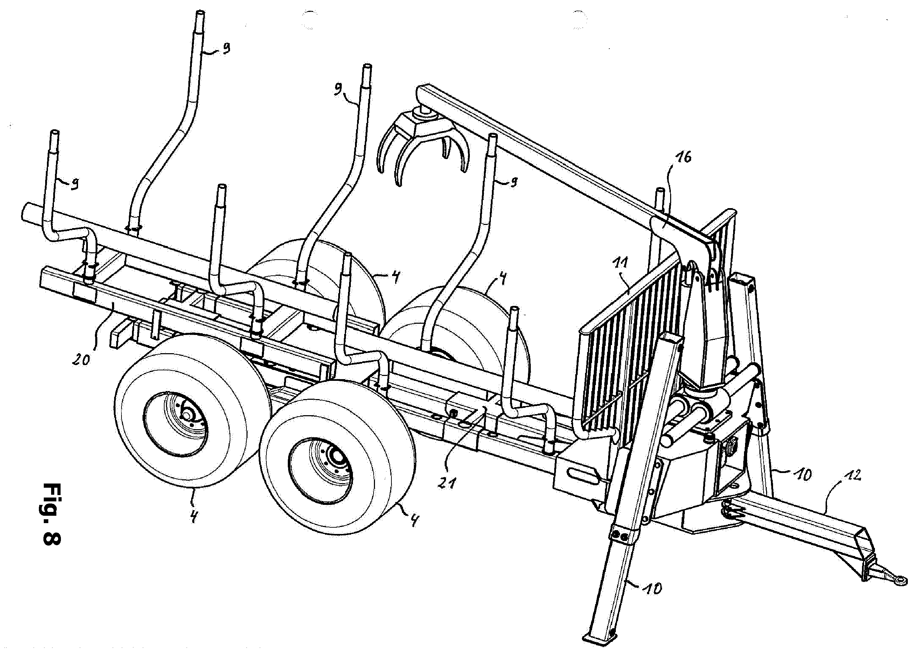

- Fig. 8: eine Darstellung ähnlich derjenigen nach Fig. 7, jedoch in perspektivischer Darstellung;
- Fig. 9: Darstellungen der Rungen mit Verlängerung, Schutzleisten, Verdrehsicherung und Kunststoffkappe;
- Fig. 10: in Ansicht A eine Draufsicht auf einen Abschnitt des Hilfsrahmenrohrs mit Aussparung und Nut als Verdrehsicherung für die Rungen und Ansicht B eine Längsschnittdarstellung durch den entsprechenden Abschnitt des Hilfsrahmenrohrs mit bereits eingesetzter Runge;
- Fig. 11: eine Darstellung der Rückewagen-Arbeitsstation mit Zapfwellendurchtrieb über das Stirngitter, um z.B. eine Häcksler zu betreiben, der sich auf dem Rahmen der Arbeitsstation befindet, und
- Fig. 12: eine Darstellung ähnlich derjenigen nach Fig. 11, jedoch mit angekoppeltem Hänger, um das Hackprodukt aufnehmen zu können.

Bei den nachstehenden Erläuterungen werden für gleiche oder gleichwirkende Teile dieselben Bezugszeichen verwendet.

Die erfindungsgemäße Rückewagen-Arbeitsstation für den forst- und landtechnischen Einsatz umfasst einen Rahmen 1, der einen Achsträger 2 aufnimmt. Der Achsträger fixiert jeweils eine Schwinge 3, die Achse und Räder 4 aufnimmt. Bei den gezeigten Darstellungen wird von einer Doppelachskonstruktion ausgegangen. Selbstverständlich ist ebenso eine Einfachachskonstruktion und eine Ausführung mit Zwillingsreifen im Sinne der Erfindung liegend.

Am Wagenkopf befindet sich eine Konsole 5 zur Aufnahme eines Ladekrans oder ähnlichen Arbeitsmitteln.

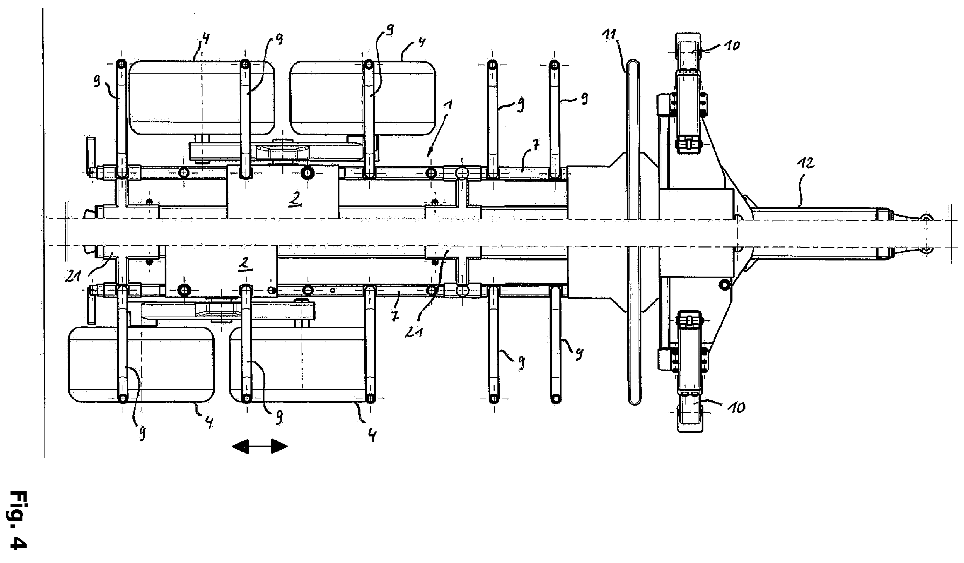

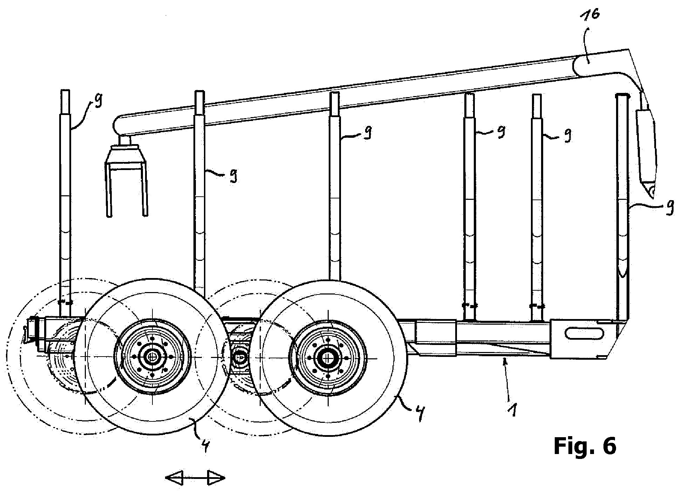

Der Rahmen 1 besteht aus einem mittig angeordneten Zentralrohr 6 und zwei hierzu parallel verlaufenden Hilfsrahmenrohren 7. In dem jeweiligen Hilfsrahmenrohr sind Aussparungen 8 zur auswechselbaren Aufnahme von Rungen 9 vorhanden. Weiterhin ist der Achsträger 2 zum Rahmen längsverschieblich angeordnet. Hierzu sei insbesondere auf die Darstellungen nach den Fig. 4 und 6 verwiesen, die beispielhafte Verschiebepositionen zeigen.

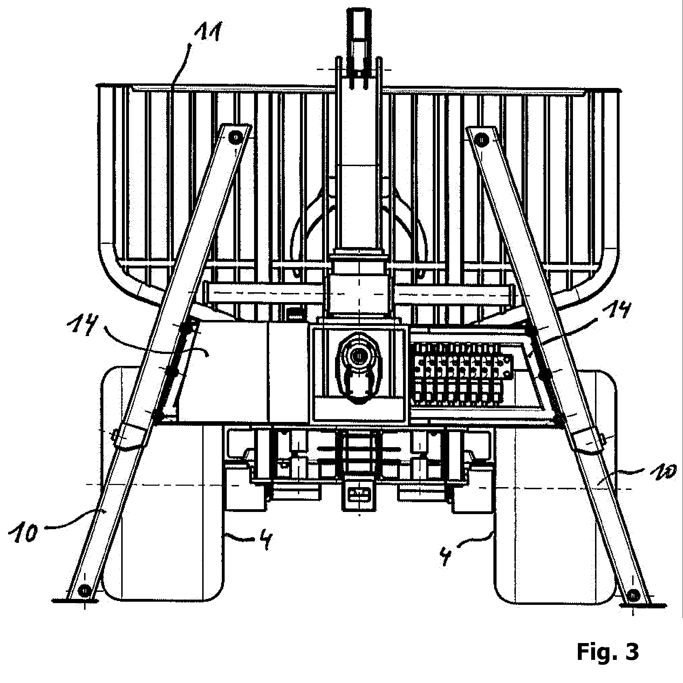

Im vorderen Wagenbereich sind Stützbeine 10 vorhanden, die teleskopartig ausgefahren werden können. Die Stützbeine 10 weisen von der Wagenfront aus betrachtet eine A-Form (siehe Fig. 3) auf.

Hinter den Stützbeinen 10 befindet sich ein Stirngitter 11, welches die Ladefläche begrenzt und die im Bereich des Wagenkopfes bzw. der Konsole befindlichen Arbeitsgeräte und sonstigen Aggregate vor Beschädigungen schützt.

Weiterhin besitzt die Rückewagen-Arbeitsstation am vorderen Ende eine Deichsel, ausgeführt als Schwenkdeichsel 12, sowie eine heckseitige Hängerkupplung 13.

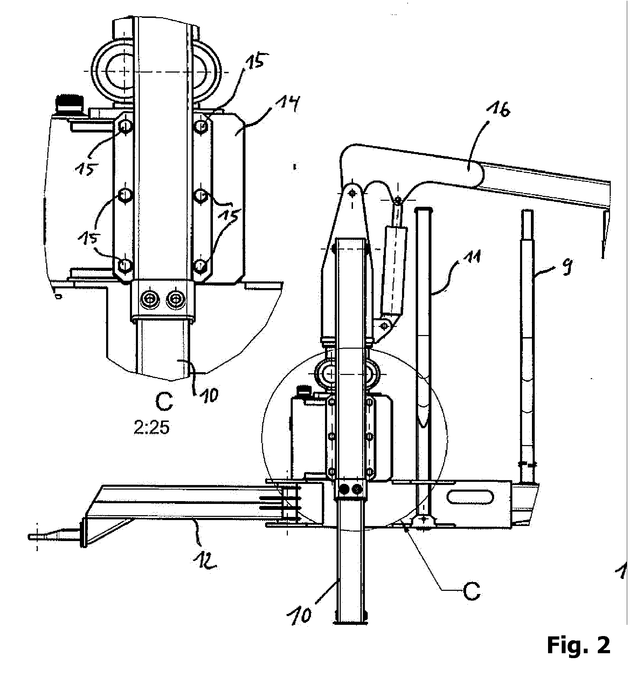

Die Fig. 2 und 3 zeigen nun Details der A-Abstützung mit Sollbruchstelle und Verschraubung. Die Sollbruchstelle ist im Bereich eines Befestigungsträgers 14 ausgebildet, der sich beidseitig ausgehend von der Wagenkopfkonsole befindet. Zur Ausbildung der Sollbruchstelle können Scherschrauben 15 Verwendung finden.

Bei der Darstellung nach Fig. 2 ist als Arbeitsmittel ein Ladekran 16 gezeigt.

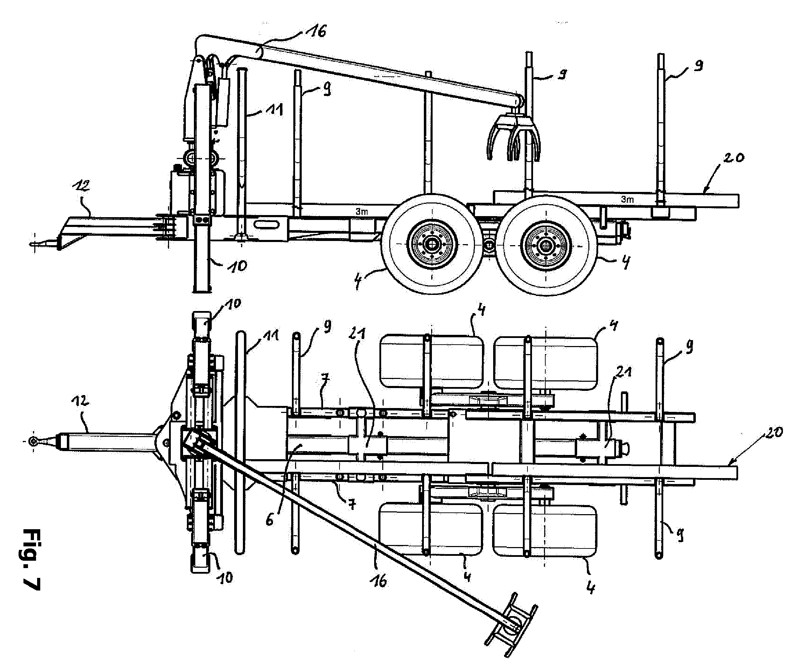

Gemäß der Seitenansicht und Draufsicht nach Fig. 7 besteht die Möglichkeit, den Rahmen durch einen Aufsatz 20 zu verlängern.

Der Aufsatz 20 ist als Verlängerungsbrücke mit Seitenholmen und Aussparungen für die Aufnahme von Rungen 9 ausgebildet.

An dieser Stelle sei darauf aufmerksam gemacht, dass die Hilfsrahmenrohre 7 und das mittig angeordnete Zentralrohr 6 mittels brückenartigen Rahmenverbindungen 21 stabilisiert werden.

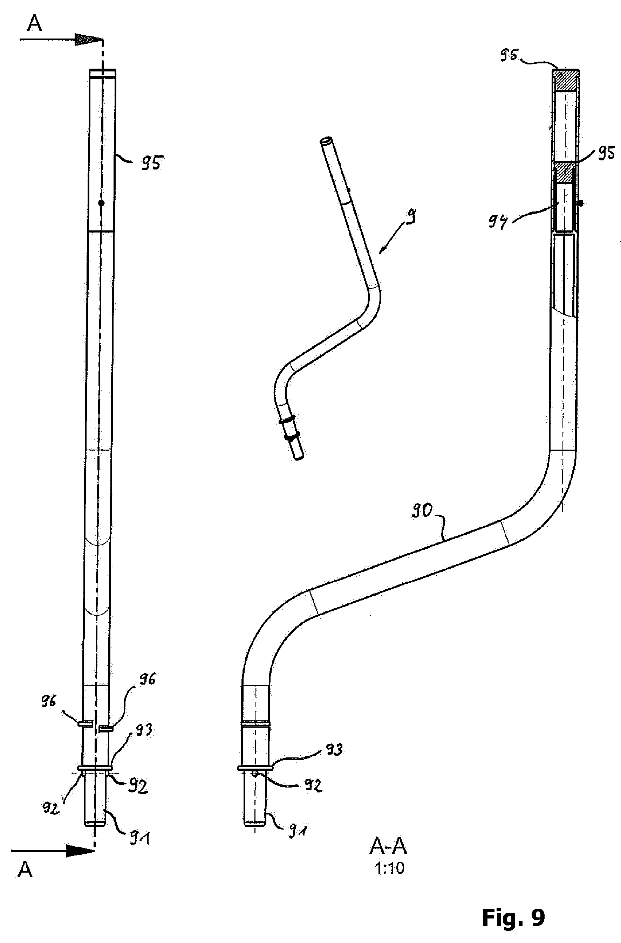

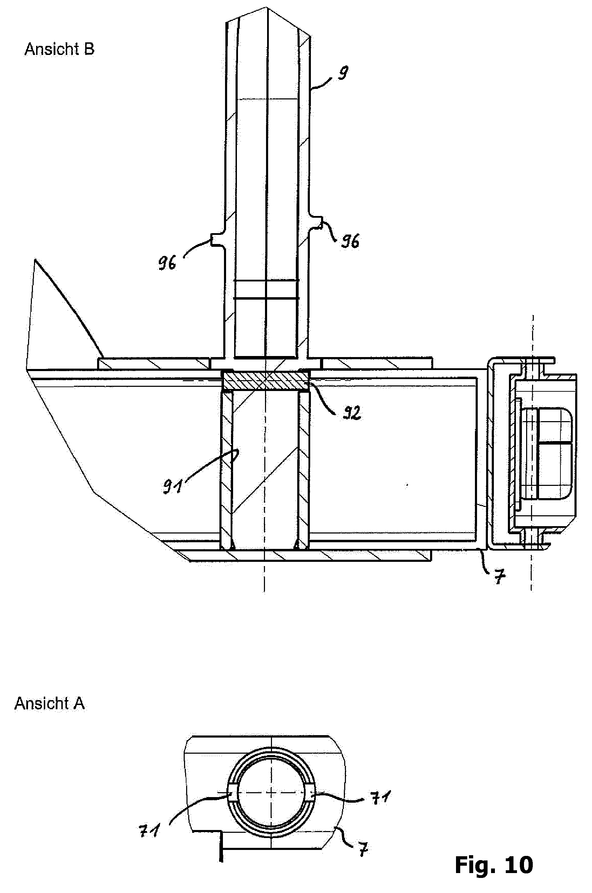

Die Ausführung der Rungen und deren verdrehsichere Fixierung im jeweiligen Hilfsrahmenrohr 7 sei mit Blick auf die Fig. 9 und 10 nachstehend erläutert.

Die Rungen 9 bestehen zunächst aus einem Basiskörper 90 mit im Wesentlichen S-förmiger Biegung. Am unteren Ende weisen die Rungen einen durchmesserreduzierten Abschnitt 91 auf, der seitlich hervorstehende Zentrierbolzen oder Zentriernasen 92 umfasst. Eine umlaufende Kragung 93 bildet einen Tiefenanschlag bezogen auf die entsprechende Aussparung im Hilfsrahmenrohr 7.

Die seitlich hervorstehenden Zentrierbolzen oder Zentriernasen 92 greifen in nutartige Rücksprünge 71 ein, die sich im Bereich der jeweiligen Aussparung im Hilfsrahmenrohr 7 befinden.

Die Rungen können eine aufsteckbare Verlängerung 94 sowie eine am Oberende aufgesetzte bevorzugt Kunststoff-Schutzkapppe 95 umfassen.

Die Kunststoff-Schutzkappe 95 stellt sicher, dass Beschädigungen beim Ausfahren des Kranarms 16 weitgehend ausgeschlossen werden können.

Darüber hinaus sind am Außenmantel der Rungen 9 hervorstehende Griffleisten 96 ausgebildet, welche dem sicheren Greifen mit Hilfe eines Ladekrans und entsprechenden Greifzangen dienen. Ein Abrutschen der Rungen beim Anheben selbiger kann wirksam verhindert werden.

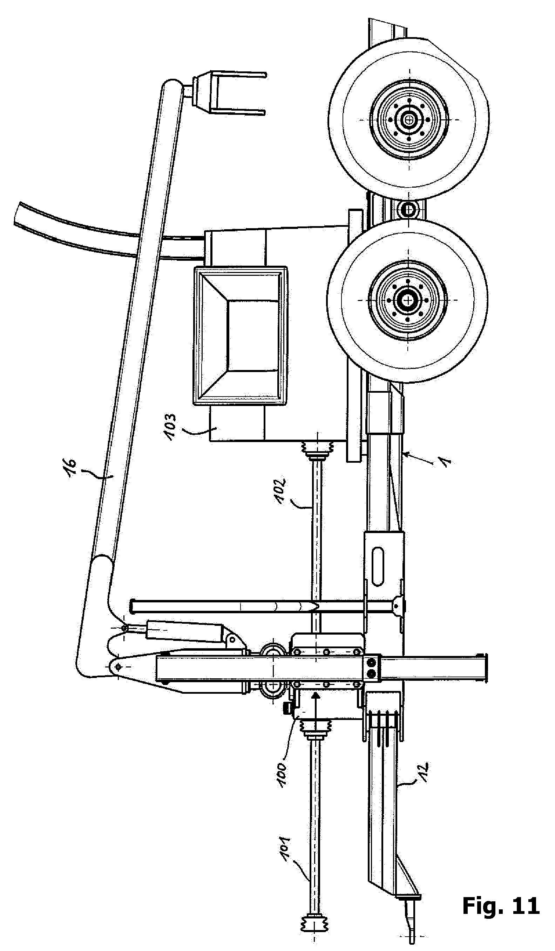

Die Fig. 11 macht deutlich, dass im Bereich des Wagenkopfes die Möglichkeit besteht, einen Zapfwellendurchtrieb bzw. ein entsprechendes Getriebe 100 anzuordnen. Der Antrieb erfolgt hier über eine Zapfwelle 101, die am Zugfahrzeug und dem dort vorhandenen Abtrieb ankoppelbar ist. Abtriebsseitig ist eine weitere Zapfwelle 102 vorhanden, die im gezeigten Beispiel einen Hacker 103 antreibt.

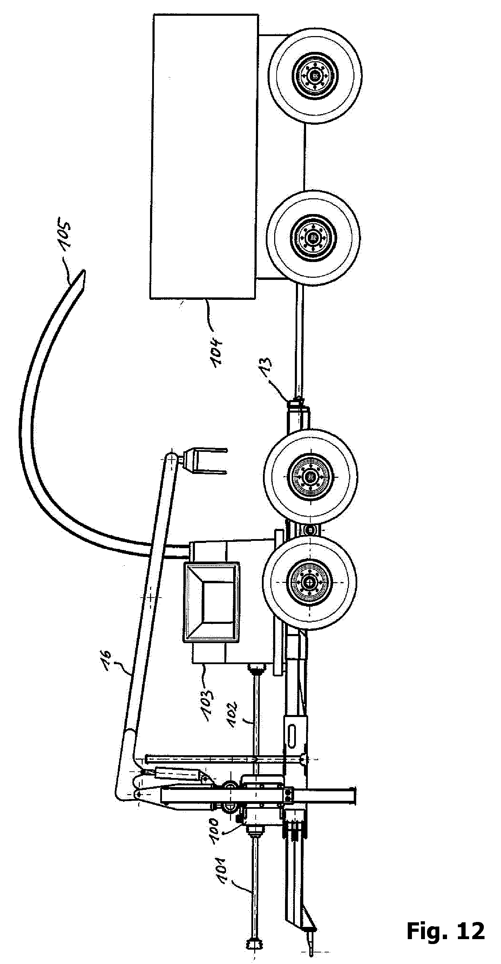

Gemäß Fig. 12 kann über die Kupplung 13 an die Rückewagen-Arbeitsstation ein Nachläufer oder ein Transporthänger 104 angeschlossen werden, zu dem der Auswurf 105 des Hackers 103 führt.

Die Achsen der Rückewagen-Arbeitsstation können über einen eigenen Antrieb verfügen, so dass sich die Manövrierfähigkeit und Geländegängigkeit der Gesamtanodnung erhöht.

Die Position der Rungen ist unabhängig von der Position des Achsträgers einstellbar mit der Folge eines sich ergebenden variablen Radstands und Vorteilen beim Beladen und Transportieren unterschiedlich schwerer Lasten.

Anstelle eines Hackers 103 kann als Arbeitsmittel auch ein Scheibenhäcksler oder eine ähnliche Gerätschaft Verwendung finden.

## Patentansprüche

1. Rückewagen-Arbeitsstation für forst- und landtechnischen Einsatz, umfassend einen Rahmen (1) mit Achsträger (2), Achse und Rädern (4), am Rahmen (1) befestigbare Rungen (9), hydraulisch ausfahrbare seitliche Stützbeine (10) sowie eine am Wagenkopf befindliche Konsole (5) zur Aufnahme eines Ladekrans (16) oder ähnlichen Arbeitsmittels,
wobei die Stützbeine am Wagenkopf ausgebildet sind, der Rahmen (1) aus einem mittig angeordneten Zentralrohr (6) sowie zwei hierzu parallel verlaufenden Hilfsrahmenrohren (7) besteht, die Hilfsrahmenrohre (7) und das Zentralrohr (6) mittels brückenartigen Rahmenverbindungen (21) stabilisiert werden, im jeweiligen Hilfsrahmenrohr (7) Aussparungen zur verdrehsicheren Rungenaufnahme vorgesehen sind und der Achsträger (2) zum Rahmen längsverschieblich angeordnet ist.

2. Rückewagen-Arbeitsstation nach Anspruch 1,
**dadurch gekennzeichnet, dass**
am Wagenende eine Verlängerungsbrücke mit Seitenholmen und Aussparungen für die Rungenaufnahme aufsetzbar ist.

3. Rückewagen-Arbeitsstation nach Anspruch 1 oder 2,
**dadurch gekennzeichnet, dass**
die Stützbeine (10) als Teleskopanordnung ausgebildet sind und von der Wagenfront betrachtet eine A-Form aufweisen.

4. Rückewagen-Arbeitsstation nach einem der vorangegangenen Ansprüche,
**dadurch gekennzeichnet, dass**
die Stützbeine (10) über eine Sollbruchstelle mit dem Wagenkörper verbunden sind.

5. Rückewagen-Arbeitsstation nach einem der vorangegangenen Ansprüche,
**dadurch gekennzeichnet, dass**
der Wagenkopf einen Zapfwellendurchtrieb (100) und/oder ein Getriebe mit Nebenabtrieb aufnimmt.

6. Rückewagen-Arbeitsstation nach einem der vorangegangenen Ansprüche,
**dadurch gekennzeichnet, dass**
am Wagenkopf ein die Ladefläche begrenzendes Stirngitter (11) angeordnet ist.

7. Rückewagen-Arbeitsstation nach einem der vorangegangenen Ansprüche,
**dadurch gekennzeichnet, dass**
mindestens eine Achse über einen Antrieb verfügt.

8. Rückewagen-Arbeitsstation nach Anspruch 6 oder 7,
**dadurch gekennzeichnet, dass**
durch das Stirngitter (11) eine Antriebswelle für ein Arbeitsmittel geführt wird, welches auf den Rahmen (1) montierbar ist.

9. Rückewagen-Arbeitsstation nach einem der vorangegangenen Ansprüche,
**dadurch gekennzeichnet, dass**
die brückenartigen Rahmenverbindungen vom Wagenende aufschiebbar sind.

10. Rückewagen-Arbeitsstation nach einem der vorangegangenen Ansprüche,
**dadurch gekennzeichnet, dass**
am Wagenende am oder im Zentralrohr (6) eine Hängerkupplung (13) vorgesehen ist.

11. Rückewagen-Arbeitsstation nach einem der vorangegangenen Ansprüche,
**dadurch gekennzeichnet, dass**
an den unteren Enden der Rungen (9) seitlich hervorstehende Zentrierbolzen oder Zentriernasen (92) angeordnet sind.

12. Rückewagen-Arbeitsstation nach einem der vorangegangenen Ansprüche,
**dadurch gekennzeichnet, dass**
an den Rungen hervorstehende Griffleisten (96) vorgesehen sind.

13. Rückewagen-Arbeitsstation nach einem der vorangegangenen Ansprüche,
**dadurch gekennzeichnet, dass**
an den oberen Enden der Rungen Schutzkappen (95) aufsetzbar sind.

14. Rückewagen-Arbeitsstation nach einem der vorangegangenen Ansprüche,
**dadurch gekennzeichnet, dass**
mindestens ein Radpaar einen Radnabenmotor aufweist.

## Claims

1. A forestry trailer workstation for forest and agricultural use, comprising a frame (1) with an axle carrier (2), an axle and wheels (4), stanchions (9) that can be fastened to the frame (1), hydraulically extendable lateral support legs (10), and a console (5) situated at the trailer head for accommodating a loading crane (16) or similar working means, wherein the support legs are formed on the trailer head, the frame (1) consists of a centrally arranged central tube (6) and two auxiliary frame tubes (7) extending parallel thereto, the auxiliary frame tubes (7) and the central tube (6) being stabilised by means of bridge-like frame connections (21), recesses for the twist-proof accommodation of the stanchions are provided in the respective auxiliary frame tube (7), and the axle carrier (2) is arranged to be longitudinally displaceable in relation to the frame.

2. A forestry trailer workstation according to claim 1, **characterized in that** an extension bridge with side struts and recesses for accommodating the stanchions can be placed on the end of the trailer.

3. A forestry trailer workstation according to claim 1 or 2, **characterized in that** the support legs (10) are formed as a telescopic arrangement and, as viewed from the front of the trailer, have the shape of an A.

4. A forestry trailer workstation according to one of the preceding claims,
**characterized in that** the support legs (10) are connected via a predetermined breaking point to the trailer body.

5. A forestry trailer workstation according to one of the preceding claims,
**characterized in that** the trailer head accommodates a PTO through-drive (100) and/or a gearbox with a power take-off.

6. A forestry trailer workstation according to one of the preceding claims,
**characterized in that** a front grate (11) delimiting the loading platform is arranged at the head of the trailer.

7. A forestry trailer workstation according to one of the preceding claims,
**characterized in that** at least one axle comprises a drive.

8. A forestry trailer workstation according to claim 6 or 7, **characterized in that** a drive shaft for a working means is guided through the front grate (11), which working means can be mounted on the frame (1).

9. A forestry trailer workstation according to one of the preceding claims,
**characterized in that** the bridge-like frame connections can be inserted from the end of the trailer.

10. A forestry trailer workstation according to one of the preceding claims,
**characterized in that** a trailer coupling (13) is provided at the end of the trailer on or in the central tube (6).

11. A forestry trailer workstation according to one of the preceding claims,
**characterized in that** laterally protruding centring pins or centring lugs (92) are arranged at the bottom ends of the stanchions (9).

12. A forestry trailer workstation according to one of the preceding claims,
**characterized in that** protruding handle strips (96) are provided on the stanchions.

13. A forestry trailer workstation according to one of the preceding claims,
**characterized in that** a protective caps (95) can be inserted onto the upper ends of the stanchions.

14. A forestry trailer workstation according to one of the preceding claims,
**characterized in that** at least one pair of wheels comprises a wheel hub motor.

## Revendications

1. Poste de travail sur remorque pour travaux forestiers et agricoles, comprenant un châssis (1) avec un support d'essieu (2), un essieu et des roues (4), des ridelles (9) pouvant être fixées au châssis (1), des pieds d'appui latéraux (10) pouvant être déployés par des moyens hydrauliques et une console (5) en tête de remorque pour recevoir une grue de chargement (16) ou un instrument similaire, dans lequel les pieds d'appui sont formés en tête de la remorque, le châssis (1) est formé par un tube central (6) disposé au centre et deux tubes de châssis auxiliaires (7) parallèles à celui-ci, les tubes de châssis auxiliaires (7) et le tube central (6) sont stabilisés par des liaisons au châssis (21) en forme de pont, des découpes sont prévues dans chaque tube de châssis auxiliaire (7) pour recevoir des ridelles en les empêchant de pivoter et le support d'essieu (2) est disposé de façon à permettre sa translation longitudinale par rapport au châssis.

2. Poste de travail sur remorque selon la revendication 1, **caractérisé en ce qu'**un pont de rallonge muni de longerons latéraux et de découpes pour recevoir les ridelles peut être posé sur l'extrémité de la remorque.

3. Poste de travail sur remorque selon la revendication 1 ou 2, **caractérisé en ce que** les pieds d'appui (10) sont conformés comme un dispositif télescopique et présentent la forme d'un A, vus depuis l'avant de la remorque.

4. Poste de travail sur remorque selon l'une des revendications précédentes, **caractérisé en ce que** les pieds d'appui (10) sont reliés au corps de la remorque par l'intermédiaire d'un point de rupture désigné.

5. Poste de travail sur remorque selon l'une des revendications précédentes, **caractérisé en ce que** la tête de la remorque reçoit une transmission à prise de force (100) et/ou un engrenage avec une prise de force.

6. Poste de travail sur remorque selon l'une des revendications précédentes, **caractérisé en ce qu'**une grille frontale (11) délimitant la surface de chargement est disposée sur la tête de la remorque.

7. Poste de travail sur remorque selon l'une des revendications précédentes, **caractérisé en ce qu'**au moins un essieu dispose d'un entraînement.

8. Poste de travail sur remorque selon la revendication 6 ou 7, **caractérisé en ce qu'**un arbre d'entraînement est passé à travers la grille frontale (11) pour un instrument qui peut être monté sur le châssis (1).

9. Poste de travail sur remorque selon l'une des revendications précédentes, **caractérisé en ce que** les liaisons au châssis en forme de pont peuvent être insérées en coulissant par l'extrémité de la remorque.

10. Poste de travail sur remorque selon l'une des revendications précédentes, **caractérisé en ce qu'**un attelage de remorque (13) est prévu à l'extrémité de la remorque ou dans le tube central (6).

11. Poste de travail sur remorque selon l'une des revendications précédentes, **caractérisé en ce que** des boulons de centrage ou de ergots de centrage (92) dépassant latéralement sont disposés aux extrémités inférieures des ridelles (9).

12. Poste de travail sur remorque selon l'une des revendications précédentes, **caractérisé en ce que** des bandes de préhension (96) en saillie sont prévues sur les ridelles.

13. Poste de travail sur remorque selon l'une des revendications précédentes, **caractérisé en ce que** des capuchons de protection (95) peuvent être posés sur les extrémités supérieures des ridelles.

14. Poste de travail sur remorque selon l'une des revendications précédentes, **caractérisé en ce qu'**au moins une paire de roues présente un moteur sur moyeu.
